# EUROPÄISCHE PATENTSCHRIFT

(11) **EP 1 619 147 B1**
(45) Veröffentlichungstag und Bekanntmachung des Hinweises auf die Patenterteilung: **26.09.2007**
(21) Anmeldenummer: 05013758.7
(22) Anmeldetag: 25.06.2005
(51) Int. Cl.: B65G 47/84

(54) **Transportstern**
Starwheel
Roue à étoile

(30) Priorität: 17.07.2004 DE 102004034739
(43) Veröffentlichungstag der Anmeldung: 25.01.2006
(73) Patentinhaber: KHS AG, 44143 Dortmund (DE)
(72) Erfinder: Fritsche, Claas, 44141 Dortmund (DE); Deckert, Lutz, 45721 Haltern am See (DE)

(56) Entgegenhaltungen:
- DE-A1- 3 040 096
- DE-U1-4202004 011 24
- US-A- 3 710 928
- US-A- 4 075 086
- US-A- 5 373 934

## Beschreibung

Die Erfindung bezieht sich auf einen Transportstern für Flaschen oder dergleichen Behälter und zur Verwendung bei Behälterbehandlungsmaschinen, beispielsweise bei Etikettier- und Füllmaschinen gemäß Oberbegriff Patentanspruch 1.

Transportsterne dieser Art sind in unterschiedlichsten Ausführungen bekannt. Sie bestehen beispielsweise aus zwei oder mehr, in parallelen Ebenen übereinander und achsgleich miteinander angeordneten kreisring- oder kreisscheibenförmigen Sternelementen. Diese sind an ihrem Umfang mit Taschen oder Ausnehmungen versehen, welche diese Taschen oder Aufnahmen bilden. Zusätzlich sind die Sternelemente über Abstandhalter derart miteinander verbunden, dass sie höhenmäßig auf Abstand zueinander angeordnet sind.

Bei der Verarbeitung empfindlicher Behälter, z. B. bei der Verarbeitung von lackierten oder aber bei bereits etikettierten Behältern oder Flaschen kann es zu Beschädigungen durch Anschlagen oder Reiben am Transportstern kommen. Um einen harten Anschlag der Behälter gegen Begrenzungsflächen der Taschen zu vermeiden, wurde bereits vorgeschlagen (DE 34 16 654), die die Aufnahmetaschen bildenden Ausnehmungen mit elastischen Rückstellmitteln, beispielsweise mit einem eingelassenen Borstenkranz zu versehen.

Weiterhin ist vielfach auch eine gegen Verdrehen gesicherte Anordnung der Behälter in den Taschen des Transportsternes erforderlich. Hierfür wurde bereits vorgeschlagen, die Behälter in den Taschen zu klemmen (DE 30 40 096), und zwar dadurch, dass die Aufnahmen jeweils von radial zur Achse des Transportsternes bewegbaren und dabei für das Klemmen des jeweiligen Behälters elastisch verformbaren Elementen gebildet sind.

Bekannt ist weiterhin ein Transportstern für Flaschen (US 5,373,934), mit mehreren am Umfang des Transportsternes von Ausnehmungen gebildeten Taschen, deren Tascheninnenflächen jeweils vollständig von dem profilierten freiliegenden Bereich eines Brems- oder Schonelementes gebildet sind. Nachteilig hierbei ist u.a., dass die Brems- und Schonelemente relativ große und daher auch teuere Formteile sind.

Aufgabe der Erfindung ist es, einen Transportstern aufzuzeigen, der unter Beibehaltung einer betriebssicheren und möglichst einfachen Konstruktion einen schonenden und/oder gegen Verdrehen gesicherten Transport von Flaschen oder dergleichen Behältern ermöglicht. Zur Lösung dieser Aufgabe ist ein Transportstern entsprechend dem Patentanspruch 1 ausgebildet.

Eine Besonderheit des erfindungsgemäßen Transportsternes besteht darin, dass an jeder Aufnahmetasche für einen Behälter wenigstens ein Brems- und Schonelement aus einem gummi- oder dauerelastischen Material vorgesehen ist, dessen die Anlage für einen Behälter bildender Bereich strukturiert ist, und zwar derart, dass dieser Bereich von einer Vielzahl von leistenartigen Abschnitten gebildet ist, die mit ihrer Längserstreckung parallel oder annähernd zur Achse des Transportsternes orientiert sind. Hierdurch ist eine schonende Behandlung der Behälter gewährleistet. Zugleich ist aber auch ein Drehen der Behälter beim Transport mit dem Transportstern vermieden, so dass die Behälter im Transportstern, beispielsweise im Auslaufstern einer Etikettiermaschine einer weiteren Behandlung unterzogen werden können, beispielsweise einer Steuerstreifenetikettierung und/oder dem Umlegen oder endgültigen Andrücken oder Anbürsten einer Folierung im Bereich des

Behälterverschlusses usw.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in vereinfachter Darstellung und in Draufsicht einen Transportstern gemäß der Erfindung;
- Fig. 2: den Transportstern der Fig. 1 in Seitenansicht;
- Fig. 3: einen Schnitt entsprechend der Linie I - I der Figur 1;
- Fig. 4: in vergrößerter Teildarstellung eine der Taschen des Transportsternes, zusammen mit einem Brems- und Schonelement;
- Fig. 5: in perspektivischer Einzeldarstellung eines der Brems- oder Schonelemente;
- Fig. 6: in Einzeldarstellung eine Draufsicht auf das Brems- oder Schonelement.

In den Figuren ist 1 ein Transportstern einer Behälter- oder Flaschenbehandlungsmaschine, beispielsweise der Einlauf- oder Auslaufstern an einer solchen Maschine, z. B. Etikettiermaschine.

Der Transportstern 1 besteht in an sich bekannter Weise aus einem oberen, kreisringartigen Sternelement 2 und aus einem unteren, kreisringartigen Sternelement 3, die achsgleich zueinander angeordnet sowie über mehrere Distanzelemente oder Abstandhalter 4 in Richtung ihrer gemeinsamen Achse voneinander beabstandet und parallel zueinander miteinander verbunden sind. Die Sternelemente 2 und 3 sowie die Abstandhalter 4 bestehen jeweils aus einem relativ harten und belastbaren Material, z.B. Kunststoff.

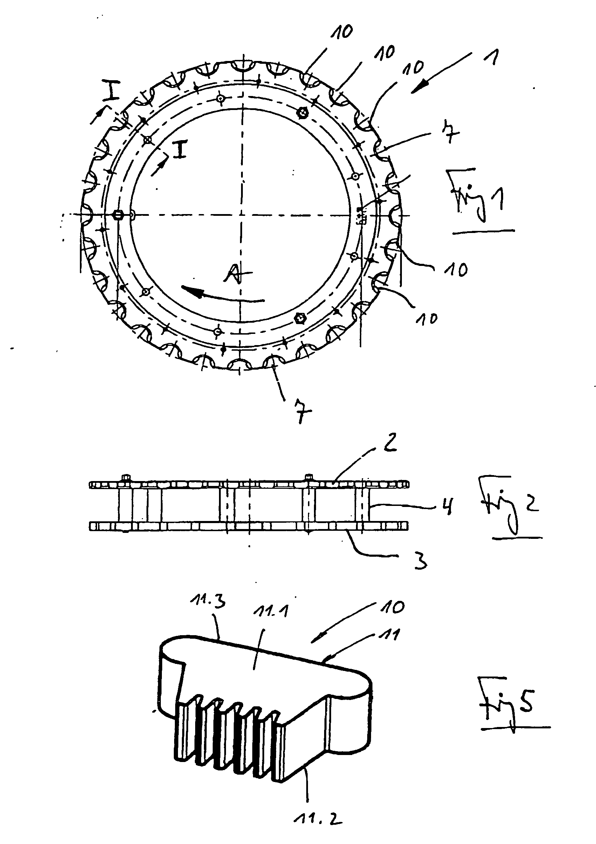

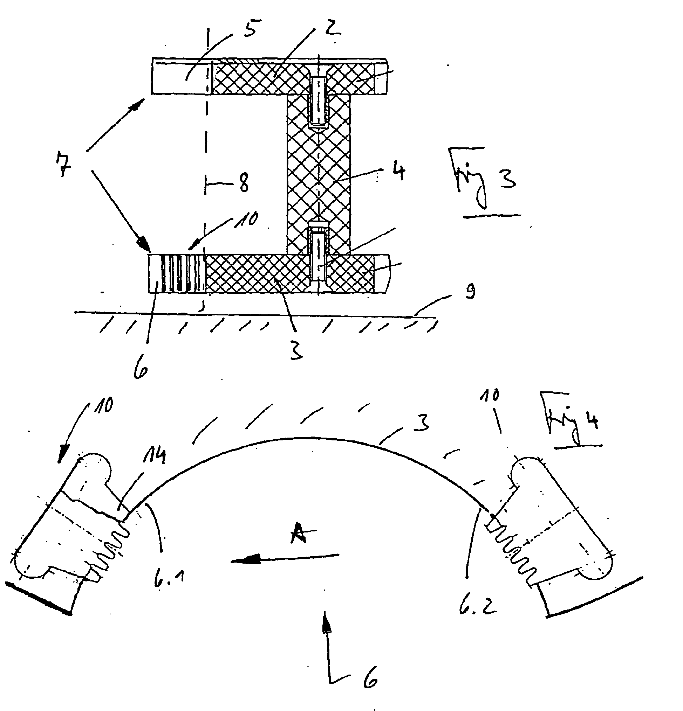

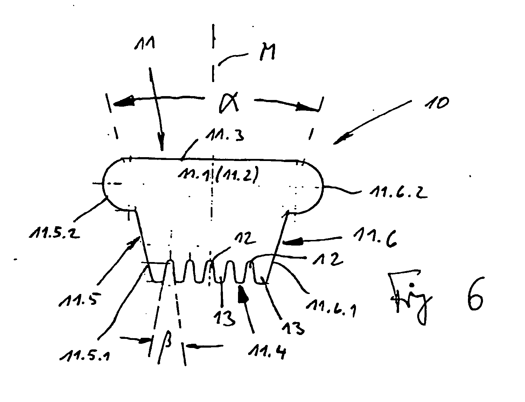

An ihrem äußeren Umfang sind die Sternelemente 2 und 3 jeweils mit einer Vielzahl von zu diesem Umfang offenen Ausnehmungen 5 (im Sternelement 2, Figur 2) und Ausnehmungen 6 (im Sternelement 3, Figur 4) versehen. Jeweils eine Ausnehmung 5 ist einer Ausnehmung 6 zugeordnet, so dass jeweils eine Ausnehmung 5 und eine Ausnehmung 6 eine gemeinsame Aufnahme oder Tasche 7 für einen Behälter 8 bilden, wie dies in den Figuren mit unterbrochenen Linien angedeutet ist. Im Verwendungsfall ist der Transportstern 1 auf einer Nabe oder einem Rad um eine vertikale Achse umlaufend angetrieben montiert, und zwar derart, dass sich das Sternelement 3 etwas oberhalb einer unteren Transportebene 9 befindet, auf der die von den Aufnahmen 7 aufgenommenen Behälter 8 mit ihrem Boden aufstehen.

Um eine möglichst schonende Behandlung der Behälter 8 im Transportstern 1 zu erreichen, sind bei der dargestellten Ausführungsform die Taschen 7 im Bereich der Ausnehmungen 6 jeweils mit zwei Brems- und Schonelementen 10 versehen, wobei ein derartiges Element jeweils an einem Randbereich 6.1 und 6.2 vorgesehen ist, der an die offene Seite der jeweiligen Ausnehmung 6 anschließt und in etwa quer zum Umfang bzw. zur Drehbewegung A des Transportsternes verläuft, so dass jeder in einer Aufnahme 7 aufgenommene Behälter 8 mit einem bezogen auf die Drehrichtung A vorderen Bereich seines Behälterumfangs sowie mit einem bezogen auf die Drehrichtung A rückwärtigen Bereich seines Behälterumfangs gegen ein derartiges Brems- oder Schonelement 10 anliegt.

Die Brems- und Schonelemente 10 sind als Formteile aus einem gummielastischen Material, beispielsweise aus einem Gummi oder Kautschuk oder aus einem elastomeren Kunststoffmaterial gefertigt, beispielsweise durch Ausschneiden, z. B. Wasserstrahlschneiden aus einem plattenförmigen gummielastischen Ausgangsmaterial oder durch Abtrennen von einem beispielsweise extrudierten strangartigen Profilmaterial oder aber durch Formen bzw. Spritzgießen.

Brems- und Schonelemente 10 wie in der Figur 6 beispielsweise dargestellt, lassen sich hinsichtlich ihrer Formgebung in etwa so beschreiben, dass jedes Element aus einem Form- oder Profilkörper 11 besteht, der bei der dargestellten Ausführungsform eine plane Oberseite 11.1 und eine plane Unterseite 11.2 aufweist, die in Ebenen parallel zueinander und voneinander beabstandet vorgesehen sind und einen Abstand voneinander aufweisen, der gleich oder etwa gleich der Dicke des Sternelementes 3 ist. Weiterhin besitzt der Profilkörper 11 eine plane oder im Wesentlichen plane Rückseite 11.3, eine sich parallel zu dieser Rückseite erstreckende, aber der Rückseite mit Abstand gegenüber liegende Vorderseite 11.4 sowie zwei weitere Seiten 11.5 und 11.6. Diese sind über eine Teillänge 11.5.1 und 11.6.1 jeweils geradlinig oder plan ausgebildet und gehen mit dieser Teillänge in die Vorderseite 11.4 über. Die Ebenen der Teilbereiche 11.5.1 und 11.6.1 schließen miteinander einen Winkel α kleiner als 45° ein, d. h. bei der dargestellten Ausführungsform einen Winkel α von etwa 30°, der sich zur Rückseite 11.3 hin öffnet. Am Übergang zu der Rückseite 11.3 bilden die beiden Seiten 11.5 und 11.6 mit einem jeweils in etwa halbkreisförmigen Teilabschnitt 11.5.2 bzw. 11.6.2 einen Vorsprung, dessen Krümmungsachse senkrecht zur Oberseite 11.1 bzw. Unterseite 11.2 liegt.

An der Vorderseite 11.4 sind das Brems- und Schonelement 10 bzw. dessen Profilkörpers 11 mit mehreren nutenförmigen Einschnitten oder Ausnehmungen 12 versehen, die sich jeweils von der Oberseite 11.1 bis an die Unterseite 11.2 erstrecken und im Querschnitt V-förmig ausgebildet sind, und zwar derart, dass sich jede Ausnehmung 12 ausgehend von der Vorderseite 11.4 zu ihrem Boden hin verengt. Bei der dargestellten Ausführungsform sind insgesamt fünf Ausnehmungen vorgesehen. Außerdem ist der Profilkörper 11 spiegelsymmetrisch zu einer Mittelebene M ausgebildet, die senkrecht zu der Oberseite 11.1 und Unterseite 11.2 orientiert ist und die Rückseite 11.3 sowie die Vorderseite 11.1 senkrecht schneidet.

Die Seitenflächen jeder Ausnehmung schließen miteinander einen Winkel β ein, der bei der dargestellten Ausführungsform etwa 15° beträgt. Weiterhin ist bei der dargestellten Ausführungsform die Tiefe jeder Ausnehmung 12 gleich dem Achsabstand, den zwei benachbarte Ausnehmungen voneinander aufweisen, und beträgt etwa drei Einheiten, wobei eine Einheit beispielsweise ein Millimeter ist.

Durch die Ausnehmungen 12 sind an der Vorderseite mehrere elastische Stege 13 gebildet, und zwar bei der dargestellten Ausführungsform insgesamt sechs derartige Stege, die sich jeweils senkrecht zur Ebene der Oberseite 11.1 und Unterseite 11.2 zwischen diesen erstrecken.

Jedes Brems- und Schonelement 10 ist in einer Befestigungsöffnung 14 des Sternelementes 3 formschlüssig gehalten, und zwar derart, dass ein Teil des Profilkörpers 11, welches (Teil) die Rückseite 11.3, die beiden von den Teilabschnitten 11.5.2 bzw. 11.6.2 gebildeten Vorsprünge und eine Teillänge der Teilabschnitte 11.5.1 und 11.6.1 aufweist, formschlüssig in der Befestigungsöffnung 14 aufgenommen, und zwar bei der dargestellten Ausführungsform derart, dass nur die leistenartigen Stege 13 in die jeweilige Ausnehmung 6 hineinreichen. Jeder in einer Tasche 7 aufgenommene Behälter liegt somit mit seinem Behälterumfang gegen die parallel zur Achse des Transportsternes 1 orientierten leistenartigen Stege 13 der Brems- und Schonelemente 10 anliegt und ist hierdurch schonend, aber auch gegen Verdrehen gesichert in der jeweiligen Tasche 7 gehalten, und zwar ohne dass hohe auf die Behälter einwirkende Klemmkräfte erforderlich sind.

Bei der dargestellten Ausführungsform sind die Ausnehmungen 5 und 6 so ausgebildet, dass jede Flasche 8 etwa auf ihrem halben Umfang von der betreffenden Aufnahme 7 bzw. von den Ausnehmungen 5 und 6 aufgenommen ist. Um dies bei in die Ausnehmungen 6 hineinreichenden Stegen 13 zu ermöglichen, sind die Ausnehmungen 6 jeweils etwas größer als der Querschnitt der Behälter bzw. Flaschen 8.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zu Grunde liegende Erfindungsgedanke verlassen wird. So wurde vorstehend davon ausgegangen, dass die Brems- und Schonelemente 10 lediglich an den Ausnehmungen 6 des unteren Sternelementes 3 vorgesehen sind. Derartige Brems- und Schonelemente können auch an den Ausnehmungen 5 und 6 beider Sternelemente 2 und 3 oder aber beispielsweise auch nur an den Ausnehmungen 5 des oberen Sternelementes 2 vorgesehen sein.

Auch die spezielle konstruktive Ausgestaltung des Transportsternes 1 ist grundsätzlich unabhängig von der Verwendung der Brems- und Schonelemente. Weiterhin ist es grundsätzlich auch möglich, dass diese Brems- und Schonelemente nicht nur an einem oder an mehreren ringartigen Sternelementen vorgesehen sind, sondern beispielsweise zwischen diesen Sternelementen angeordnet oder aber derart ausgebildet sind, dass sich die Brems- und Schonelemente jeweils über die gesamte axiale Höhe oder zumindest über einen Großteil der axialen Höhe der Aufnahmen oder Taschen des betreffenden Transportsternes erstrecken.

Ebenfalls ist auch die oben beschriebene Ausführungsform der Brems- und Schonelemente nur als ein, den Umfang der vorliegenden Erfindung nicht beschränkendes Ausführungsbeispiel zu versehen. So sind z.B. auch Brems- und Schonelemente vorgesehen, welche im Wesentlichen horizontal verlaufende Profilierungen oder aber auch mit kreis- oder sternförmigen Noppen versehene Vorderseiten 11.4 aufweisen.

### Bezugszeichenliste

- 1: Transportstern
- 2,3: Sternelement
- 4: Abstandhalter
- 5, 6: Ausnehmung
- 6.1, 6.2: Randbereich der Ausnehmung 6
- 7: Aufnahme oder Tasche
- 8: Behälter bzw. Flasche
- 9: Transportebene
- 10: Brems- und Schonelement
- 11: Profilkörper
- 11.1: Oberseite
- 11.2: Unterseite
- 11.3: Rückseite
- 11.4: Vorderseite
- 11.5, 11.6: Seiten
- 11.5.1, 11.6.1: plane Abschnitte
- 11.5.2, 11.6.2: Vorsprünge bildende kreiszylinderförmige Abschnitte
- 12: nutenartiger Einschnitt
- 13: Steg
- 14: Befestigungsöffnung

- A: Drehrichtung des Transportsternes
- α: Winkel zwischen den Ebenen der Abschnitte 11.5.1 und 11.6.1
- β: Winkel der Seitenflächen der nutenartigen Einschnitte 12
- M: Mittelebene

## Patentansprüche

1. Transportstern für Flaschen oder dergleichen behälter zur Verwendung bei Behälterbehandlungsmaschinen, beispielsweise bei Etikettier- oder Füllmaschinen, mit mehreren am Umfang des Transportsternes gebildeten Taschen (7) für jeweils einen Behälter (8), sowie mit mehreren jeweils von einem Formkörper (11) aus einem gummielastischen Material bestehenden Brems- und Schonelementen (10), von denen jeweils wenigstens eines in jeder Tasche (7) mit einem dort frei liegenden und profilierten Bereich eine elastische Anlage für einen Behälter bildet, **dadurch gekennzeichnet, dass** die Brems- und Schonelemente (10) mit ihrem frei liegenden Bereichen nur jeweils einen Teil einer Tascheninnenfläche jeder Tasche (7) einnehmen.

2. Transportstern nach Anspruch 1, **dadurch gekennzeichnet, dass** die Brems- und Schonelemente (10) an ihrem frei liegenden Bereich mehrere, parallel zueinander verlaufende und voneinander beabstandete leistenartige Vorsprünge oder Stege (13) bilden, die mit ihrer Längserstreckung parallel oder annähernd parallel zur Achse des Transportsternes (1) orientiert sind.

3. Transportelement nach Anspruch 1, **dadurch gekennzeichnet, dass** die Brems- und Schonelemente (10) an ihrem frei liegenden Bereich mehrere, parallel zueinander verlaufende und voneinander beabstandete leistenartige Vorsprünge oder Stege (13) bilden, die mit ihrer Längserstreckung quer oder annähernd quer zur Achse des Transportelementes (1) orientiert sind.

4. Transportstern nach Anspruch 1, **dadurch gekennzeichnet, dass** die Brems- und Schonelemente (10) an ihrem frei liegenden Bereich mehrere, voneinander beabstandete Noppen bilden.

5. Transportstern nach Anspruch 1 oder 2, **dadurch gekennzeichnet, dass** in jeder Tasche (7) wenigstens zwei Brems- und Schonelemente (10) vorgesehen sind, und zwar an Randbereichen (6.1, 6.2), an denen die Tasche (7) zum Umfang des Transportsternes (1) hin offen ist.

6. Transportstern nach einem der vorhergehenden Ansprüche, **dadurch gekennzeichnet, dass** die Brems- und Schonelemente (10) in den Transportstern (1) eingesetzt sind.

7. Transportstern nach einem der vorhergehenden Ansprüche, **dadurch gekennzeichnet, dass** die Brems- und Schonelemente (10) jeweils formschlüssig in Befestigungsöffnungen (14) des Transportsternes (1) gehalten sind.

8. Transportstem nach einem der vorhergehenden Ansprüche, **dadurch gekennzeichnet, dass** er wenigstens zwei achsgleich und parallel zueinander angeordnete und in Richtung ihrer Achse gegeneinander versetzte scheiben- oder ringartige Sternelemente (2, 3) aufweist, dass am Umfang der Sternelemente (2, 3) die Taschen (7) oder diese bildende Ausnehmungen (5, 6) vorgesehen sind, und dass zumindest die Taschen (7) oder Ausnehmungen (6) eines Sternelementes (3) die Brems- und Schonelemente (10) aufweisen.

9. Transportstern nach Anspruch 8, **dadurch gekennzeichnet, dass** wenigstens ein Sternelement (3) die Befestigungsöffnungen (14) aufweist, in denen jeweils ein Brems- und Schonelement (10) gehalten sind.

10. Transportstern nach einem der vorhergehenden Ansprüche, **dadurch gekennzeichnet, dass** die Brems- und Schonelemente (10) jeweils durch Klemmsitz durch die Elastizität ihres Materials in Befestigungsöffnungen (14) des Transportsternes (1) gehalten sind.

11. Transportstern nach einem der vorhergehenden Ansprüche, **dadurch gekennzeichnet, dass** die Brems- und Schonelemente (10) mit ihrem frei liegenden, die Behälteranlage bildenden Bereich nicht oder nur unwesentlich über den übrigen Rand einer die jeweilige Tasche (7) bildenden Ausnehmung (6) vorstehen.

## Claims

1. Transport star for bottles or similar containers to be used in container treatment machines, for example in labelling or filling machines, the said transport star having a plurality of pockets (7) that are formed at the circumference of the transport star for one container (8) each, as well as a plurality of braking and protecting elements (10) that each comprise a moulded body (11) that is produced from a rubber material, at least one of which braking and protecting elements, together with an exposed, profiled region at that location, respectively forming a resilient abutment for a container in each pocket (7), **characterised in that** the braking and protecting elements (10) with their exposed regions accommodate only a part of a pocket inner surface of each pocket (7).

2. Transport star according to claim 1, **characterised in that** the braking and protecting elements (10), at their exposed region, form a plurality of strip-like projections or webs (13), which extend parallel to each other, are spaced apart from each other and are orientated with their longitudinal extension parallel or approximately parallel relative to the axis of the transport star (1).

3. Transport element according to claim 1, **characterised in that** the braking and protecting elements (10), at their exposed region, form strip-like projections or webs (13), which extend parallel to each other, are spaced apart from each other and are orientated with their longitudinal extension at right angles or approximately at right angles relative to the axis of the transport element (1).

4. Transport star according to claim 1, **characterised in that** the braking and protecting elements (10), at their exposed region, form a plurality of projections that are spaced apart from each other.

5. Transport star according to claim 1 or 2, **characterised in that** at least two braking and protecting elements (10) are provided in each pocket (7) at edge regions (6.1, 6.2) at which the pocket (7) is open towards the circumference of the transport star (1).

6. Transport star according to one of the preceding claims, **characterised in that** the braking and protecting elements (10) are inserted into the transport star (1).

7. Transport star according to one of the preceding claims, **characterised in that** the braking and protecting elements (10) are each retained in a positive locking manner in securing openings (14) of the transport star (1).

8. Transport star according to one of the preceding claims, **characterised in that** the said transport star includes at least two disc-like or ring-like star elements (2, 3), which are equi-axial, disposed parallel to each other and are offset in the direction of their axis, **in that** the pockets (7) or recesses (5, 6) that form the said pockets are provided on the circumference of the star elements (2, 3) and **in that** at least the pockets (7) or recesses (5, 6) of a star element (3) include the braking and protecting elements (10).

9. Transport star according to claim 8, **characterised in that** at least one star element (3) includes the securing openings (14), in each of which one braking and protecting element (10) is retained.

10. Transport star according to one of the preceding claims, **characterised in that** the braking and protecting elements (10) are retained in each case in securing openings (14) of the transport star (1) by means of press fit through the resilience of their material.

11. Transport star according to one of the preceding claims, **characterised in that** the braking and protecting elements (10), with their exposed region that forms the container abutment, do not protrude or only protrude inconsiderably over the remaining edge of a recess (6) that forms the respective pocket (7).

## Revendications

1. Système de transport en étoile pour bouteilles ou récipients similaires pour une utilisation dans des machines de manipulation de récipients, par exemple dans des machines à étiqueter ou de remplissage, comportant plusieurs poches (7) réalisées sur la circonférence du système de transport en étoile pour un récipient (8) à chaque fois ainsi que plusieurs éléments de freinage et de protection (10) composés d'un corps moulé (11) constitué d'un matériau élastique, éléments parmi lesquels au moins un forme un appui élastique pour un récipient dans chaque poche (7) conjointement à une zone dégagée et profilée à cet emplacement-là, **caractérisé en ce que** les éléments de freinage et de protection (10) occupent, avec leur zones dégagées, seulement une partie d'une surface interne de chaque poche (7).

2. Système de transport en étoile selon la revendication 1, **caractérisé en ce que** les éléments de freinage et de protection (10) forment, sur leur zone dégagée, plusieurs saillies ou tiges (13) en forme de barrettes parallèles les unes aux autres et espacées les unes des autres qui sont orientées, par leur longueur, parallèlement ou de manière approximativement parallèle à l'axe du système de transport en étoile (1).

3. Elément de transport selon la revendication 1, **caractérisé en ce que** les éléments de freinage et de protection (10) forment, sur leur zone dégagée, plusieurs saillies ou tiges (13) en forme de barrettes parallèles les unes aux autres et espacées les unes des autres qui sont orientées, par leur longueur, transversalement ou de manière approximativement transversale à l'axe de l'élément de transport (1).

4. Système de transport en étoile selon la revendication 1, **caractérisé en ce que** les éléments de freinage et de protection (10) forment, sur leur zone dégagée, plusieurs boutons espacés les uns des autres.

5. Système de transport en étoile selon la revendication 1 ou 2, **caractérisé en ce qu'**on a prévu, dans chaque poche (7), au moins deux éléments de freinage et de protection (10) et, en particulier, sur des zones de bordure (6.1, 6.2) sur lesquelles la poche (7) est ouverte en direction de la circonférence du système de transport en étoile (1).

6. Système de transport en étoile selon l'une quelconque des revendications précédentes, **caractérisé en ce que** les éléments de freinage et de protection (10) sont utilisés dans le système de transport en étoile (1).

7. Système de transport en étoile selon l'une quelconque des revendications précédentes, **caractérisé en ce que** les éléments de freinage et de protection (10) sont fixés par coopération de formes dans des orifices de fixation (14) du système de transport en étoile (1).

8. Système de transport en étoile selon l'une quelconque des revendications précédentes, **caractérisé en ce qu'**il comporte au moins deux éléments en étoile (2, 3) en forme de disques ou d'anneaux disposés dans le même axe et parallèlement l'un par rapport à l'autre et décalés l'un par rapport à l'autre dans le sens de leur axe, **en ce qu'**on a prévu les poches (7) ou des cavités (5, 6) formant celles-ci sur la circonférence des éléments en étoile (2, 3) et **en ce qu'**au moins les poches (7) ou les cavités (6) d'un élément en étoile (3) comportent les éléments de freinage et de protection (10).

9. Système de transport en étoile selon la revendication 8, **caractérisé en ce qu'**au moins un élément en étoile (3) comporte les orifices de fixation (14) dans lesquels un élément de freinage et de protection (10) est fixé.

10. Système de transport en étoile selon l'une quelconque des revendications précédentes, **caractérisé en ce que** les éléments de freinage et de protection (10) sont fixés par ajustement pressé grâce, à l'élasticité de leur matériau, dans des orifices de fixation (14) du système de transport en étoile (1).

11. Système de transport en étoile selon l'une quelconque des revendications précédentes, **caractérisé en ce que** les éléments de freinage et de protection (10) ne dépassent pas, avec leur zone dégagée formant l'appui pour les récipients, au-dessus du reste du bord d'une cavité (6) formant la poche respective (7) ou ne dépassent que de manière insignifiante.
